# EUROPÄISCHE PATENTANMELDUNG

(11) **EP 0 526 767 A1**
(43) Veröffentlichungstag der Anmeldung: **10.02.1993**
(21) Anmeldenummer: 92111858.4
(22) Anmeldetag: 11.07.1992
(51) Int. Cl.: G02F 1/01, G01J 5/06

(54) **Optischer Leistungsbegrenzer**

(30) Priorität: 06.08.1991 DE 4125951
(71) Anmelder: DORNIER GMBH, D-88004 Friedrichshafen (DE)
(72) Erfinder: Lautenschlager, Peter, Dr., W-7778 Markdorf (DE); Scherber, Werner, Dr., W-7775 Bermatingen (DE)
(74) Vertreter: Landsmann, Ralf, Dipl.-Ing.

(57) **Zusammenfassung**

Optischer Leistungsbegrenzer, insbesondere zum Schutz von IR-Detektoren gegen den Einfall hoher Strahlungsintensitäten, der eine dünne Schicht aus einem Material umfaßt, dessen Durchlässigkeit mit steigender Temperatur stark abfällt.

## Beschreibung

Die Erfindung betrifft einen optischen Leistungsbegrenzer, insbesondere zum Schutz von IR-Detektoren (z.B. in Wärmebildgeräten) gegen den Einfall hoher Strahlungsintensitäten.

Wärmebildgeräte stellen heute ein weitverbreitetes und unersetzliches Instrument für die militärische Aufklärung dar. Die optische Leistungsfähigkeit hat durch die Entwicklung der CMT-Array-Detektoren und der CCD-Auslesetechnik einen sehr hohen Stand erreicht. Die Geräte können bei Tag und bei Nacht vorteilhaft eingesetzt werden und liefern einen Informationsgehalt, der weitgehend komplementär ist zu Sichtgeräten in anderen Frequenzbereichen. Andererseits sind Wärmebildgeräte relativ teuer und leicht verwundbar. C0₂ -Laser mit mittleren, heute gängigen Leistungsstärken sind ohne weiteres in der Lage, IR-Detektoren zu blenden oder auch zu zerstören. Ein Schutz ist mit herkömmlichen statischen Filtern nicht oder nur mit erheblicher Empfindlichkeitseinbuße möglich, weil die Betriebsfrequenzen des C0₂ -Lasers im Maximum der Umgebungsstrahlung liegen. Eine Gegenmaßnahme könnte im Einsatz sehr schmalbandiger selektiver Filter bestehen, welche die Laserstrahlung wirksam abhalten, ohne die Empfindlichkeit des Sichtgerätes zu beeinträchtigen. Die Methode ist praktikabel, solange die Bedrohung sich auf einige diskrete Frequenzen beschränkt, würde jedoch bei durchstimmbaren Lasern versagen.

Aus der DE 36 05 635 A1 ist ein Leistungsbegrenzer für Laserlicht bekannt, dessen Durchlässigkeit mit steigender Intensität der zu begrenzenden Strahlung stark abfällt. Er umfaßt eine Durchbruchsstrecke aus einem gasförmigen, flüssigen oder festen Material. Die Leistungsbegrenzung beruht auf dem physikalischen Prinzip, daß mit steigender Intensität der einfallenden Strahlung durch Multiphononenabsorption und Kaskadenionisation ein Plasma entsteht, welches die Laserstrahlung abschirmt. Nachteilig an dieser Vorrichtung ist, daß der apparative Aufwand relativ hoch ist. So sind z.B. im Falle von flüssigen oder gasförmigen Materialien für die Durchbruchsstrecke entsprechende Behältnisse notwendig. Da der Durchbruch-Schwellenwert vom Druck innerhalb der Materialien abhängt, ist darüberhinaus eine ständige Druckregelung notwendig, wobei ein ungewollter Druckverlust eine Fehlfunktion nach sich ziehen kann.

In der US 4,795,240 ist ein Infrarot-Verschluß mit einer dünnen Schicht aus einem thermochromen Material beschrieben, dessen Durchlässigkeit mit steigender Temperatur stark abfällt. Durch einen äußeren Regelmechanismus kann die Durchlässigkeit der Schicht gesteuert werden. Dazu wird ein elektrischer Strom definierter Stärke durch eine der thermochromen Schicht benachbarten Schicht geleitet. Die entstehende Widerstandswärme wird zur Temperaturregelung der thermochromen Schicht verwendet.

Die US 4,615,587 offenbart einen thermooptischen Dünnfilm-Modulator, mit dem Bildinformationen in eine dünne thermooptische Schicht, deren Durchlässigkeit mit steigender Temperatur stark abfällt, eingeprägt und wieder gelöscht werden kann. Dafür ist eine möglichst schnelle Temperaturregelung der thermooptischen Schicht notwendig. Dies wird erreicht, indem zur Widerstandsheizung ein elektrischer Strom durch eine der thermooptischen Schicht benachbarten Metallschicht geleitet wird und gleichzeitig ein Teil der entstehenden Wärme durch eine Kühlflüssigkeit abgeführt wird. Durch Unterbrechung des Stroms kann das Gleichgewicht von Wärmeproduktion und Wärmeverlust verändert werden und dadurch die Temperatur der thermooptischen Schicht sehr schnell verändert werden.

Der Erfindung liegt die Aufgabe zugrunde, eine optischen Leistungsbegrenzer für eine Strahlung zu schaffen, der mit geringem apparativen Aufwand eine sichere Funktion ermöglicht.

Diese Aufgabe wird erfindungsgemäß gelöst von einer Anordnung mit den kennzeichnenden Merkmalen des Anspruch 1. Ausgestaltungen der Erfindung sind Gegenstände von Unteransprüchen.

Der erfindungsgemäße Leistungsbegrenzer umfaßt eine dünne Schicht aus einem Material, dessen Durchlässigkeit mit steigender Temperatur stark abfällt. Bei normalem Betrieb des zu schützenden Detektors, d.h. bei kleinen einfallenden Lichtintensitäten, ist die Schicht transparent. Durch den Einfall hoher Strahlungsintensitäten aber wird die Schicht erwärmt, wodurch deren Durchlässigkeit stark vermindert wird. Sie wirkt dann stark reflektierend und/oder absorbierend. Die erfindungsgemäße Vorrichtung stellt somit ein optisches Filter mit intensitätsabhängiger Durchlässigkeit dar, dessen Schutzfunktion, zumindest im Betriebsbereich von IR-Detektoren, im wesentlichen wellenlängenunabhängig ist.

Besonders vorteilhaft sind Schichtmaterialien, die infolge der Erwärmung einen Phasenübergang Halbleiter --> Metall durchlaufen, z.B. V0₂, Ti₂0₃ oder Sn. Unterhalb der Umwandlungstemperatur sind sie halbleitend und somit, zumindest als dünne Schicht, transparent, oberhalb werden sie metallisch und zeigen die hohe metallische Reflexion. Durch Wahl der Umwandlungstemperatur kann die Einsatzschwelle an die Toleranzgrenze des zu schützenden Detektors angepaßt werden.

Die Wirkungsweise und weitere Vorteile der Erfindung werden mit Hilfe einer Fig. beschrieben. Die Fig. zeigt die Durchlässigkeit einer Schicht aus Vanadiumdioxid (V0₂) in Abhängigkeit von der Schichtdicke bei einer einfallenden Strahlung der Wellenlänge 10,6 u.m.

Die Umwandlungstemperatur des V0₂ liegt bei 67 ° C. Bei niedrigeren Temperaturen hat die dielektrische Funktion nach der Literatur (bei I = 3,4 um) einen Wert von e = 7,62 + i 0,11 (Halbleiter), bei höherer Temperatur ist e = - 13,6 + i 21,1 (Metall), wobei i die imaginäre Einheit ist. In der Fig. ist die Durchlässigkeit in der halbleitenden Phase 2 (durchgezogene Linie) und in der metallischen Phase 1 (gestrichelte Linie) als Funktion der Schichtdicke dargestellt. Eine hohe Durchlässigkeit von über 90 % bei T < 67 ° erhält man im ersten Interferenzmaximum M bei etwa 1.9 um Schichtdicke, während in der metallischen Phase die Durchlässigkeit auf Null zurückgeht.

Beim Betrieb des optischen Leistungsbegrenzers im Zustand hoher Durchlässigkeit ist diese aufgrund der auftretenden Interferenzerscheinungen nicht für jede Wellenlänge gleich groß. Bei 10,6 um beträgt sie über 90 % und fällt bei 9,5 um bzw. 12 um auf 80 % ab, was jedoch keine wesentliche Einschränkung bei der Erzeugung von Wärmebildern darstellt.

Der erfindungsgemäße optische Leistungsbegrenzer hat den Vorteil, daß er ohne äußeren Regelmechanismus arbeitet. Deshalb besitzt er einen unkomplizierten technischen Aufbau, der unempfindlich gegen Störungen ist. Seine Wirkungsweise ist unabhängig von der Richtung der einfallenden Strahlung.

Da die Schicht sehr dünn ist, ist die Reaktionsgeschwindigkeit der Anordnung sehr hoch.

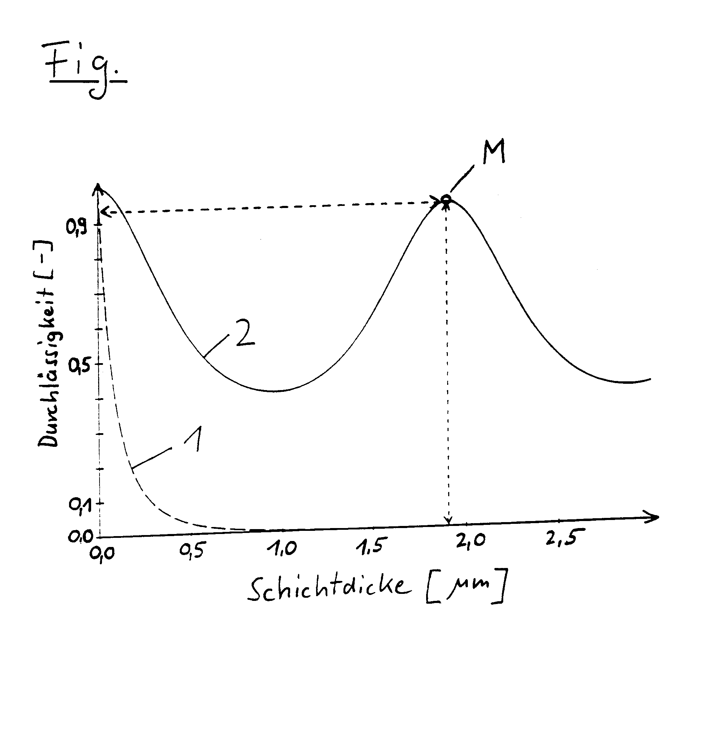

## Patentansprüche

1. Optischer Leistungsbegrenzer für eine Strahlung mit einem Material, dessen Durchlässigkeit mit steigender Intensität der zu begrenzenden Strahlung stark abfällt, gekennzeichnet durch eine dünne Schicht aus einem Material, dessen Durchlässigkeit mit steigender Temperatur stark abfällt, wobei bei steigender Intensität der einfallenden Strahlung eine Erwärmung der dünnen Schicht bewirkt wird.

2. Optischer Leistungsbegrenzer nach Anspruch 1, dadurch gekennzeichnet, daß das Schichtmaterial bei steigender Temperatur eine Halbleiter-Metall-Phasenübergang durchläuft.

3. Optischer Leistungsbegrenzer nach Anspruch 2, dadurch gekennzeichnet, daß das Schichtmaterial V0₂, Ti₂0₃ oder Sn ist.

4. Optischer Leistungsbegrenzer nach einem der vorangehenden Ansprüche, dadurch gekennzeichnet, daß die Schichtdicke zwischen 0,1 und 5 um beträgt.

5. Optischer Leistungsbegrenzer nach einem der vorangehenden Ansprüche, dadurch gekennzeichnet, daß das Schichtmaterial V0₂ ist und die Schichtdicke 1,9 um beträgt.
